# EUROPEAN PATENT APPLICATION

(11) **EP 3 586 655 A1**
(43) Date of publication of application: **01.01.2020**
(21) Application number: 17900421.3
(22) Date of filing: 13.03.2017
(51) Int. Cl.: A24F 47/00

(54) **SMOKING SYSTEM, POWER SUPPLY CONTROL METHOD, PROGRAM, PRIMARY DEVICE, AND SECONDARY DEVICE**

(71) Applicant: Japan Tobacco Inc., Tokyo 105-8422 (JP)
(72) Inventor: YAMADA, Manabu, Tokyo 130-8603 (JP); NAKANO, Takuma, Tokyo 130-8603 (JP)
(74) Representative: Isarpatent
(86) International application number: PCT/JP2017/009944
(87) International publication number: WO 2018/167817

(57) **Abstract**

The purpose of the present invention to provide an opportunity for both immediate smoking and sufficient charging. This smoking system is provided with: a secondary device with a load for atomizing an aerosol source or heating a flavor source, and a power source capable of supplying power to the load; a primary device which, when connected to the secondary device, is capable of supplying power to the load and the power source; and a control unit which causes the primary device to supply the power to the load as long as the primary device and the secondary device are connected to each other in a use state wherein individuals can continue to smoke using the secondary device.

## Description

### TECHNICAL FIELD

The present invention relates to a smoking system, a method for controlling supply of electric power, a program, a primary device, and a secondary device.

### BACKGROUND ART

A smoking system having a construction for charging, by use of a portable charger, a heating device for heating an aerosol generating article by an electric heater, every time after a predetermined number of times of smoking actions are completed (for example, refer to Patent Literature 1). Especially, in the case that a large quantity of electric power is required for making aerosol to be released from an aerosol generating article, it is impossible to perform successive smoking actions since no smoking action can be performed during a charging period.

For solving the above problem, there is an idea such that aerosol is generated by directly supplying electric power from a generator to a heater, as disclosed in Patent Literature 2, for example. In such a case, it is necessary to switch between a mode for charging a heating device by a charger in a conventional charging manner and a mode for directly supplying electric power from the charger to a heater.

### CITATION LIST

### PATENT LITERATURE

Patent Literature 1: Japanese Patent Application Public Disclosure No. 2012-527222
Patent Literature 2: Japanese Patent Application Public Disclosure No. 2015-500647

### SUMMARY OF INVENTION

### TECHNICAL PROBLEM

On the other hand, a switching condition that applies when switching, in advance, from a mode for charging a heating device by a charger to a mode for directly supplying electric power to a heater by the charger, that uses direct electric supply from the charger to the heater, for immediately generating aerosol when a user is beginning to perform smoking action, has not yet found. For example, in Patent Literature 2, electric energy is directly supplied from a charger to a heater when an inhaling action by a user is detected; however, in such a case, there is a problem that it takes time until aerosol is actually generated, after an inhaling action is started by a user.

The present invention has been made by taking the above matters into consideration; and an object of the present invention is to switch, at appropriate timing, between a mode for charging a heating device by a charger and a mode for directly charging a heater by the charger, for allowing both immediate start of smoking and provision of sufficient opportunities for charging.

### SOLUTION TO PROBLEM

For solving the above problems, a mode of the present invention comprises a smoking system which comprises: a secondary device which comprises a load for atomizing an aerosol source or heating a flavor source, and a power source which can supply electric power to the load; a primary device which can supply, when it is connected to the secondary device, electric power to the load and the power source; and a control part which operates to supply electric power from the primary device to the load, under a condition that the primary device and the secondary device are connected to each other in a use state that allows smoking action using the secondary device to be continued.

Another mode of the present invention comprises the smoking system in the above mode, wherein, when the primary device and the secondary device are connected to each other after operation for supplying electric power from the power source to the load is performed, the control part judges, based on a use state of at least one of the primary device and the secondary device, whether the condition is satisfied; and if it is judged that the condition has been satisfied, operates to supply electric power from the primary device to the load.

Another mode of the present invention comprises the smoking system in the above mode, wherein the control part operates to supply electric power from the primary device to the load, prior to starting of an inhaling action for smoking performed by using the secondary device.

Another mode of the present invention comprises the smoking system in the above mode, wherein the condition is set in such a manner that the condition is satisfied prior to starting of an inhaling action for smoking performed by using the secondary device.

Another mode of the present invention comprises the smoking system in the above mode, wherein the secondary device comprises a power-supplying instruction part which instructs supply of electric power to the load; and, if the secondary device is in a use state wherein it has been instructed, by the power-supplying instruction part, to supply electric power to the load, the control part judges that the condition has been satisfied, and operates to supply electric power from the primary device to the load.

Another mode of the present invention comprises the smoking system in the above mode, wherein the primary device comprises an operation instruction part for instructing operation of the primary device, and a holding part which can keep connection between the secondary device and the primary device in a holding state and can release the connection in a non-holding state; and, if the holding part in the primary device is in the non-holding state, and, at the same time, if a use state is that wherein the operation instruction part has been manipulated, the control part judges that the condition has been satisfied, and operates to supply electric power from the primary device to the load.

Another mode of the present invention comprises the smoking system in the above mode, wherein the operation instruction part is an instruction part for instructing supplying of electric power from the primary device to the load in the non-holding state, and instructing supplying of electric power from the primary device to the power source in the holding state.

Another mode of the present invention comprises the smoking system in the above mode, wherein the operation instruction part is an instruction part used for changing the state of the holding part from the holding state to the non-holding state.

Another mode of the present invention comprises the smoking system in the above mode, wherein, if the secondary device is in a use state wherein the load can atomize the aerosol source or heat the flavor source, the control part judges that the condition has been satisfied, and operates to supply electric power from the primary device to the load.

Another mode of the present invention comprises the smoking system in the above mode, wherein at least one of the primary device and the secondary device comprises a flow path for supplying air to the aerosol source or the flavor source, in a state that the secondary device is being connected to the primary device.

Another mode of the present invention comprises the smoking system in the above mode, wherein the control part can obtain a value representing a remaining charged capacity or a voltage of the power source, and, only when the value is less than a threshold value, operates to supply electric power from the primary device to the load.

Another mode of the present invention comprises the smoking system in the above mode, wherein the control part can obtain a value representing temperature of the load, and, if a temperature rising rate of the load is larger than a threshold value, operates to stop supplying of electric power from the primary device to the load.

Another mode of the present invention comprises the smoking system in the above mode, wherein the control part can obtain a value representing electric power supplied to the load, and, if the value representing electric power becomes a value less than a threshold value during a control process for converging temperature of the load to target temperature, operates to stop supplying of electric power from the primary device to the load.

Another mode of the present invention comprises a method for controlling supply of electric power in a smoking system, and the method comprises steps for: obtaining a state of connection between a secondary device, which comprises a load for atomizing an aerosol source or heating a flavor source and a power source which can supply electric power to the load, and a primary device, which can supply electric power to the load and the power source when the primary device is connected to the secondary device; and supplying electric power from the primary device to the load, under a condition that the primary device and the secondary device are connected to each other in a use state that allows smoking action using the secondary device to be continued.

Another mode of the present invention comprises a program which makes a smoking system to perform the above method.

Another mode of the present invention comprises a primary device which can supply, when the primary device is connected to a secondary device comprising a load for atomizing an aerosol source or heating a flavor source and a power source which can supply electric power to the load, electric power to the load and the power source; wherein the primary device comprises a control part which operates to supply electric power from the primary device to the load, under a condition that the primary device and the secondary device are connected to each other in a use state that allows smoking action using the secondary device to be continued.

Another mode of the present invention comprises a secondary device which comprises a load for atomizing an aerosol source or heating a flavor source, and a power source which can supply electric power to the load, and is connectable to a primary device which can supply electric power to the load and the power source; wherein the secondary device comprises a control part which operates to supply electric power from the primary device to the load, under a condition that the primary device and the secondary device are connected to each other in a use state that allows smoking action using the secondary device to be continued.

### ADVANTAGEOUS EFFECTS OF INVENTION

According to the present invention, by performing, at appropriate timing, switching between a mode for charging a heating device by a charger and a mode for directly charging a heater by the charger, both immediate start of smoking and provision of sufficient opportunities for charging can be allowed.

### BRIEF DESCRIPTION OF DRAWINGS

Fig. 1 is a configuration diagram of a smoking system 100 according to an embodiment of the present invention.
Fig. 2 is a flow chart showing an example process 200 for making a control part to perform control according to a first condition.
Fig. 3 is a flow chart showing an example process 300 for making a control part to perform control according to a second condition.
Fig. 4 is a flow chart showing an example process 400 for making a control part to perform control according to a third condition.
Fig. 5 is an electric circuit diagram of the smoking system 100 according to an embodiment of the present invention.
Fig. 6 shows state transition corresponding to plural operation modes of the smoking system 100 according to an embodiment of the present invention.
Fig. 7 is a schematic graph for explaining temperature control when electric power is supplied to a load 144 in a secondary device 140.
Fig. 8A shows an example of an air taking-in flow path 810 constructed in a secondary device 140.
Fig. 8B shows an example of an air taking-in flow path 820 constructed in a primary device 120.
Fig. 9 is an electric circuit diagram of the smoking system 100 according to an embodiment of the present invention.

### DESCRIPTION OF EMBODIMENTS

In the following description, embodiments of the present invention will be explained in detail with reference to the figures.

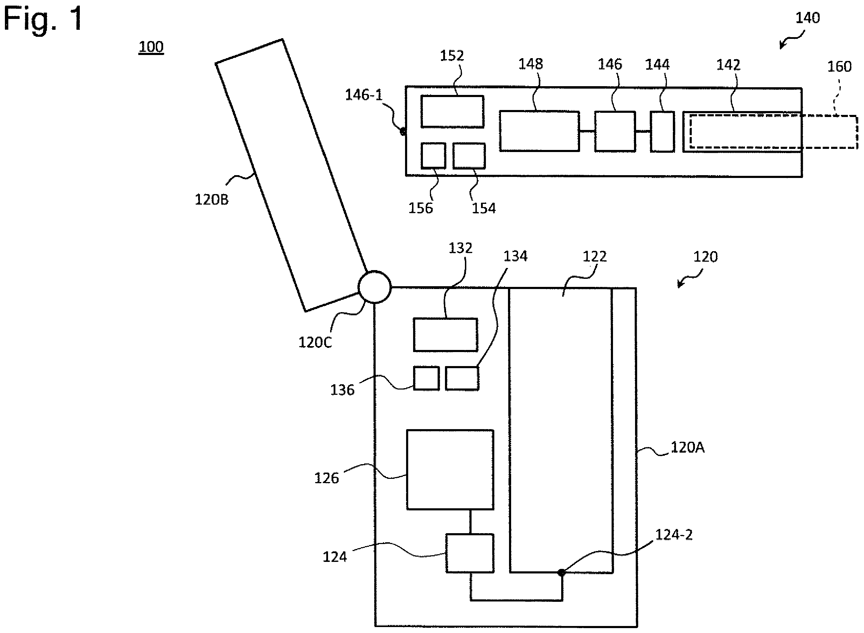

Fig. 1 is a configuration diagram of a smoking system 100 according to an embodiment of the present invention. It should be reminded that Fig. 1 shows respective elements included in the smoking system 100 in a schematic and conceptual manner, and does not show precise arrangement, shapes, sizes, positional relationship, and so on of the respective elements and the smoking system 100.

As shown in Fig. 1, the smoking system 100 comprises a primary device 120 and a secondary device 140. The smoking system 100 is constructed in such a manner that it can take a first use form wherein the secondary device 140 is electrically connected to the primary device 120 and a second use form wherein the secondary device 140 is electrically disconnected from the primary device 120. For example, with respect to the example smoking system 100 shown in Fig. 1, the secondary device 140 is electrically connected to the primary device 120 by inserting the secondary device 140 in a connection port 122 in the primary device 120, and is electrically disconnected from the primary device 120 by pulling out the secondary device 140 from the connection port 122. In another example, electrical connection/disconnection between the primary device 120 and the secondary device 140 may be done by attaching/detaching an electrically conductive cable such as a USB cable, for example.

The secondary device 140 is a device for generating aerosol or vapor including a flavor component, by electrically heating an aerosol generating article 160 for smoking. A user, who is a smoker, can inhale aerosol or vapor generated by the secondary device 140. The primary device 120 is a device for supplying electric power to the secondary device 140 in the first use form. In the first use form, the primary device 120 can charge a secondary power source 148 within the secondary device 140. The secondary device can operate by use of the secondary power source 148 therein in the second use form. For example, in the case that a predetermined quantity of electric power in the secondary power source 148 is consumed in the smoking system 100 in the second use form, the form is reverted to the first use form. After returning to the first use form, the secondary device 140 can make the secondary power source 148 to be recharged by accepting supply of electric power from the primary device 120, and, in addition, in the case that a condition, that will be explained later, has been satisfied, can continuously heat the aerosol generating article 160 by use of electric power supplied from the primary device 120.

As shown in Fig. 1, the secondary device 140 comprises an aerosol generating article holding part 142, a load 144, a driving circuit 146, the secondary power source 148, a user manipulation part 152, a control part 154, and a memory 156. For example, the secondary device 140 is constructed to have a shape and a size that are appropriate for a user to inhale aerosol or vapor. For example, a user may hold the secondary device 140 between fingers of the user and smoke it. For example, the external shape of the secondary device 140 may be approximately cylindrical, that is similar to the shape of a cigarette; however, the shape is not limited to that explained above, and the device may be constructed to have any other shape and size.

The aerosol generating article holding part 142 is a space constructed to be able to hold the aerosol generating article 160. Thus, the aerosol generating article holding part 142 may have a shape corresponding to that of the aerosol generating article 160. For example, the aerosol generating article 160 may comprise a solid aerosol base-material formed to have a cylindrical stick shape having a diameter similar to that of a cigarette. Fig. 1 shows the secondary device 140 in a state that the aerosol generating article 160 constructed as explained above is inserted into the aerosol generating article holding part 142. For example, the aerosol base-material is constructed by processing shredded tobacco or tobacco raw material having a granular form or a powder form, which releases a fragrance inhaling taste component when it is heated, to have a cylindrical shape, and adding thereto an aerosol source in a liquid form. In this regard, in the present embodiment, the aerosol base-material and/or the aerosol source function(s) as a flavor source. As shown in Fig. 1, the aerosol generating article 160 is held by the aerosol generating article holding part 142 in such a manner that an end and a main part, which comprises the aerosol base-material, of the aerosol generating article 160 is housed in the aerosol generating article holding part 142, and the other end of the aerosol generating article 160 extends to the outside of the aerosol generating article holding part 142. A user can perform smoking action by holding the end of the aerosol generating article 160, that projects from the aerosol generating article holding part 142, in the user's mouth.

When usability is taken into consideration, it is preferable that the secondary device 140 be constructed to be compact and light enough to allow a user to grasp the secondary device 140 and inhale aerosol or vapor. For example, the secondary device 140 may be constructed to have a shape similar to that of a conventional cigarette. In this regard, there is restriction relating to arrangement of electric components in the inside of the secondary device 140, since the secondary device 140 has the hollow aerosol generating article holding part 142. Thus, it is preferable that the secondary power source 148 be small; so that the capacity thereof is forced to be relatively small. On the other hand, since there is no such restriction in the primary device 120, it is preferable to construct a primary power source 126 to have a capacity sufficiently larger than that of the secondary power source 148, for making the primary device 120 to be able to charge the secondary power source 148 plural number of times. For example, it is preferable to set that the capacity of the primary power source 126 is 5-40 times larger than the capacity of the secondary power source 148; however, in this regard, the range of ratios between the capacities are not limited thereto. Also, it is preferable that each of the primary power source 126 and the secondary power source 148 be constructed by use of a lithium-ion secondary battery; however, the constructions of the power sources are not limited thereto.

The aerosol generating article 160 and the aerosol generating article holding part 142 may be constructed to have constructions different from those shown in Fig. 1. For example, the aerosol generating article 160 may be an aerosol source which is in the form of a liquid including a flavor component (a flavor source). For example, a liquid aerosol source including a flavor component (a flavor source) is polyol such as glycerin, propylene glycol, or the like in which a nicotine component is included. In the present embodiment, the aerosol source functions as the flavor source. In the case that the aerosol generating article 160 is an aerosol source including a flavor component (a flavor source), the aerosol generating article holding part 142 is constructed by use of fibrous or porous material, such as glass fibers, porous ceramics, or the like, to hold the aerosol source in the form of a liquid by spaces between fibers or in pores in the porous material, for example. Alternatively, the aerosol generating article holding part 142 may be constructed as a tank for storing the liquid. In such a construction, the secondary device 140 additionally comprises a mouthpiece member. A user can inhale generated aerosol or vapor by holding the mouthpiece member in the user's mouth.

The load 144 is a heating element for electrically heating the aerosol generating article 160 held in the aerosol generating article holding part 142. The load 144 is positioned to be in contact with the aerosol generating article 160 or positioned close to the aerosol generating article 160, for making it to be able to heat the aerosol generating article 160. In the second use form wherein the secondary device 140 is disconnected from the primary device 120, the load 144 heats the aerosol generating article 160 by use of electric power supplied from the secondary power source 148 in the secondary device 140. In the first use form wherein the secondary device 140 is connected to the primary device 120, if a predetermined condition, which will be explained later, is satisfied, the load 144 heats the aerosol generating article 160 by use of electric power supplied from the primary device 120. In this regard, in the case that the aerosol generating article 160 comprises an aerosol source and an aerosol base-material, aerosol is generated by raising the temperature of the aerosol source by heating the aerosol generating article 160 by the load 144, as explained above. On the other hand, in the case that the aerosol generating article 160 comprises a liquid aerosol source including a flavor component (a flavor source), aerosol may be generated by directly heating the aerosol source by the load 144.

Any arrangement for making the load 144 and the aerosol generating article 160 to be in contact with each other may be used. For example, the load 144 may be arranged in such a manner that the load 144 is exposed on a surface of an inner wall of the aerosol generating article holding part 142. According to the above arrangement, when the aerosol generating article 160 is inserted into the aerosol generating article holding part 142, the outer peripheral surface of the aerosol generating article 160 (for example, a side surface of the cylindrical stick) is made to be in contact with the load 144; thus, the aerosol generating article 160 can be heated from the outer peripheral part. In another example, the load 144 may enter into the aerosol base-material (by plunging the load 144 in the aerosol base-material), when the aerosol generating article 160 is inserted into the aerosol generating article holding part 142. In such a construction, the load 144 can heat the aerosol generating article 160 from the inside thereof. In this regard, it should be reminded that, instead of arranging the load 144 to be in direct contact with the aerosol generating article 160, the load 144 may be arranged in such a manner that it is arranged at a position near the aerosol generating article 160, wherein the position is that sufficiently close to the aerosol generating article 160 so that the aerosol generating article 160 can be heated by the load 144.

The secondary power source 148 is a power source used for driving the secondary device 140 in the second use form. The secondary power source 148 can supply electric power to the load 144 via the driving circuit 146. The remaining charged capacity of the secondary power source 148 decreases when electric power is supplied to the load 144; however, since the secondary power source 148 is charged by the primary device 120 in the first use form, the remaining charged capacity of the secondary power source 148 can be recovered.

The user manipulation part 152 is constructed to accept manipulation with respect to the secondary device 140 by a user. For example, user manipulation with respect to the secondary device 140 includes a start instruction for starting the secondary device 140 and a power-supplying instruction for supplying electric power to the load 144. The user manipulation part 152 may comprise a start instructing part for inputting the start instruction and a power-supplying instruction part for inputting the power-supplying instruction, wherein the above parts are separated from each other; or may comprise a single instruction part which can receive both the start instruction and the power-supplying instruction. For example, the user manipulation part 152 is constructed as a button, a switch, a control, a lever, a touch sensor, or the like which can be physically manipulated by a user.

The control part 154 is an electronic circuit module constructed as a microprocessor or a microcomputer, and programmed to control operation of the secondary device 140 in accordance with computer-executable instructions stored in the memory 156. The memory 156 is an information storing medium such as a ROM, a RAM, a flash memory, and so on. The memory 156 stores, in addition to the computer-executable instructions, setting data required for controlling the secondary device 140.

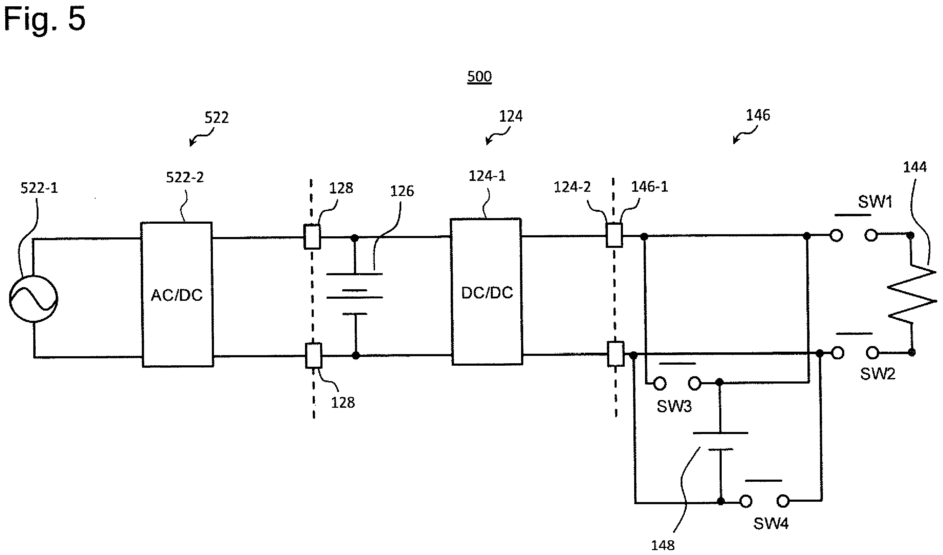

When Figs. 1 and 5 are referred to, the primary device 120 comprises the connection port 122, an electric power supplying circuit 124, the primary power source 126, an external connection terminal 128, a user manipulation part 132, a control part 134, and a memory 136. The above respective elements in the primary device 120 are included in a main body part 120A of the primary device 120, for example. The primary device 120 further comprises a holding part 120B which is drawn as a lid in Fig. 1. As shown in Fig. 1, the lid 120B is attached to a top part of the main body part 120A by engaging the lid 120B with the main body part 120A by a hinge 120C, so that the main body part 120A can be opened/closed. Fig. 1 shows the primary device 120 in a state that the lid 120B is being opened. In a state that the lid 120B is being closed, the lid 120B holds the secondary device 140 in such a manner that the secondary device 140 inserted into the connection port 122 does not drop from the connection port 122. The lid 120B may be a slide-opening/closing-type lid. Alternatively, instead of constructing the holding part 120B to have the form of a lid, the holding part 120B may be constructed by use of a different member which is able to restrict movement of the secondary device 140 (for example, a construction for engaging a hook with the secondary device 140, a construction using attracting force of a magnet, and so on).

The connection port 122 is a space in which the secondary device 140 is housed in the first use form of the smoking system 100. When the secondary device 140 is inserted into the connection port 122, a connection terminal 146-1 of the secondary device 140 is made to be in contact with a connection terminal 124-2 in the connection port 122 at the primary device 120 side. The connection terminal 146-1 is a terminal which is a part of the deriving circuit 146 of the secondary device 140, and the connection terminal 124-2 is a terminal which is a part of the electric power supplying circuit 124 of the primary device 120. By use of the above terminals, the secondary device 140 is electrically connected to the primary device 120.

The primary power source 126 is a power source used for supplying electric power to the secondary device 140 in the first use form. In the case that a predetermined condition, that will be explained later, is satisfied in the first use form, the primary power source 126 can supply electric power to the load 144 in the secondary device 140 via the electric power supplying circuit 124 and the driving circuit 146. Thus, right after the secondary device 140 is inserted into the connection port 122, so that without necessity to wait recovery of the remaining charged capacity of the secondary power source 148 in the secondary device 140, the load 144 in the secondary device 140 can heat the aerosol generating article 160 by receiving electric power from the primary power source 126. On the other hand, in the case that the predetermined condition is not satisfied in the first use form, the primary power source 126 charges the secondary power source 148 in the secondary device 140 via the electric power supplying circuit 124 and the driving circuit 146. Although the remaining charged capacity of the primary power source 126 decreases if electric power is supplied to the secondary device 140, the remaining charged capacity of the primary power source 126 can be recovered by charging it by an external charger (refer to Fig. 5) via the external connection terminal 128.

The user manipulation part 132 is constructed in such a manner that it can accept manipulation with respect to the primary device 120 by a user. User manipulation with respect to the primary device 120 includes a driving instruction for allowing supply of electric power to the secondary device 140, for example. For example, the user manipulation part 132 is constructed as a button, a switch, a control, a lever, a touch sensor, or the like which can be physically manipulated by a user.

The control part 134 is an electronic circuit module constructed as a microprocessor or a microcomputer, and programmed to control operation of the primary device 120 in accordance with computer-executable instructions stored in the memory 136. The memory 136 is an information storing medium such as a ROM, a RAM, a flash memory, and so on. The memory 156 stores, in addition to the computer-executable instructions, setting data required for controlling the primary device 120.

As explained above, in the case that a predetermined condition is satisfied in the first use form wherein the secondary device 140 is being electrically connected to the primary device 120, the smoking system 100 operates to heat the aerosol generating article 160 by supplying electric power from the primary power source 126 in the primary device 120 to the load 144 in the secondary device 140. A predetermined condition for directly supplying electric power from the primary power source 126 to the load 144 in the secondary device 140 is that the use state is a state that the smoking system 100 allows to continuously perform smoking action by use of the secondary device 140 when a user, who is performing smoking action in the second use form, connects the secondary device 140 to the primary device 120 (because the remaining charged capacity of the secondary power source 148 in the secondary device 140 has decreased, for example), and, therefore, the form of the smoking system 100 is changed to the first use form. That is, when the condition that the secondary device 140 is connected to the primary device 120 under a use state that smoking action by use of the secondary device 140 can be continued is satisfied, the smoking system 100 operates to supply electric power directly from the primary device 120 to the load 144 in the secondary device 140. On the other hand, if the use state is not a state that smoking action by use of the secondary device 140 can be continued, the smoking system 100 operates to charge electric power from the primary power source 126 in the primary device 120 to the secondary power source 148 in the secondary device 140. The control part 134 in the primary device 120 and/or the control par 154 in the secondary device 140 control operation, such as that explained above, of the smoking system 100.

Regarding the case that the smoking system 100, which form has been changed from the second use form to the first use form, is in a use state that smoking action by use of the secondary device 140 can be continued, the following three conditions are shown as tangible examples in the present disclosure. In this regard, it should be reminded that the examples should not be considered as those for limiting the scope of the present disclosure, and the scope covers any case that the primary device 120 and/or the secondary device 140 are/is in a state that allows continuation of smoking action. Further, the following example conditions and other conditions that are considered to be covered by the present disclosure may be appropriately combined and used.

A first condition is that the use state is a state that, the secondary device 140 is instructed, by the user manipulation part 152, to supply electric power to the load 144, when the secondary device 140 is connected to the primary device 120. For example, in the second use form, a user has manipulated a main power source button (the user manipulation part 152 which functions as a power-supplying instruction part) of the secondary device 140 to turn on, and has been performing smoking action. After completing a single time or plural times of smoking action, the remaining charged capacity of the secondary power source 148 decreases due thereto; thus, the user inserts the secondary device 140 into the connection port 122 in the primary device 120 while the main power source button of the secondary device 140 is being turned on. As a result of the above manipulation by the user, the secondary device 140 is electrically connected to the primary device 120, and the form of the smoking system 100 is changed to the first use form. At the time, since the main power source button of the secondary device 140 is being turned on, the secondary device 140 is in a sate that allows continuation of smoking action. The control part 134 and/or the control part 154 detect(s) the above state of the secondary device 140, and perform(s) control for making electric power to be supplied directly from the primary power source 126 in the primary device 120 to the load 144 in the secondary device 140. As a result, the user can immediately restart smoking action, without waiting for a period for charging the secondary power source 148 in the secondary device 140. On the other hand, in the case that a user has inserted the secondary device 140 into the connection port 122 of the primary device 120 after turning off the main power source button of the secondary device 140, the secondary device 140 is not in an operation state that allows continuation of smoking action. Thus, charging of the secondary power source 148 in the secondary device 140 is performed.

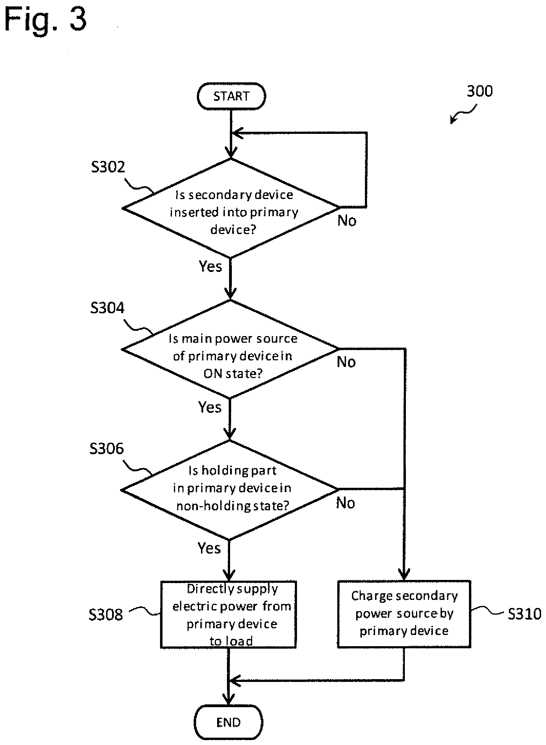

A second condition is that the use state is a state that the primary device 120 does not hold, by a holding part 120B, the secondary device 140 inserted into the connection port 122, and supplying of electric power to the secondary device 140 is allowed by the user manipulation part 132. For example, after completing a single time or plural times of smoking action during when the form is the second use form, a user opens a lid 120B of the primary device 120, and inserts the secondary device 140 into connection port 122 in the primary device 120. By performing the above manipulation, the form of the smoking system 100 is changed to the first use form; however, after the above manipulation, the user may close the lid 120B of primary device 120 or may leave the lid 120B open. In the case that the user manipulates a main power source button (the user manipulation part 132 which functions as an operation instruction part for allowing supply of electric power to the secondary device 140) of the primary device 120 to turn on while the lid 120B is being opened, the aerosol generating article 160 held by the secondary device 140 in the connection port 122 (the aerosol generating article 160 which is held in such a manner that a part of the aerosol generating article 160 protrudes from the aerosol generating article holding part 142) is not covered by the lid 120B; thus, the primary device 120 is brought to an operation state wherein continuation of smoking action is possible. The control part 134 and/or the control part 154 detect(s) the above state of the primary device 120, and perform(s) control for making electric power to be supplied directly from the primary power source 126 in the primary device 120 to the load 144 in the secondary device 140 (refer to the flow chart in Fig. 3). As a result, the user can immediately restart smoking action, without waiting for a period for charging the secondary power source 148 in the secondary device 140. On the other hand, in the case that the user closes the lid 120B and turns on the main power source button of the primary device 120, the above aerosol generating article 160 is covered by the lid 120B; thus, the primary device 120 is not in the operation state wherein continuation of smoking action is possible. Further, there may be a case that the lid 120B is closed during when the state is a state that the aerosol generating article 160 is not held by the aerosol generating article holding part 142 in the secondary device 140. In either case, the primary device 120 is not in an operation state that allows continuation of smoking action. Thus, charging of the secondary power source 148 in the secondary device 140 is performed. In this regard, it may be possible to construct at least one of the primary device 120, the secondary device 140, and the aerosol generating article 160 in such a manner that the lid 120B cannot be closed in the state that the aerosol generating article 160 is not held by the aerosol generating article holding part 142 in the secondary device 140. By adopting the above construction, it becomes possible to establish the second condition more certainly.

A third condition is that the use state is a state that the secondary device 140 can heat the aerosol generating article 160 in the first use form. For example, during smoking action when the form is the second use form, a user inserts the secondary device 140 into the connection port 122 in the primary device 120, wherein the secondary device 140 is in a state that the aerosol generating article 160, in which a part usable during smoking action still remains, is being attached thereto. Alternatively, after completing a single time or plural times of smoking action when the form is the second use form, a user inserts the secondary device 140, from which a used aerosol generating article 160 has been removed, into the connection port 122 of the primary device 120, and, thereafter, attaches a new aerosol generating article 160 to the aerosol generating article holding part 142 in the secondary device 140. Since the secondary device 140 holds the aerosol generating article 160 which is being used for smoking or the new aerosol generating article 160, the secondary device 140 is in an operation state that allows continuation of smoking action. The control part 134 and/or the control part 154 detect(s) the above state of the secondary device 140, and perform(s) control for making electric power to be supplied directly from the primary power source 126 in the primary device 120 to the load 144 in the secondary device 140 (refer to the flow chart in Fig. 5). As a result, the user can immediately restart smoking action, without waiting for a period for charging the secondary power source 148 in the secondary device 140.

It should be reminded that the first, second, and third conditions are those that should be satisfied before inhaling action for smoking by a user is performed.

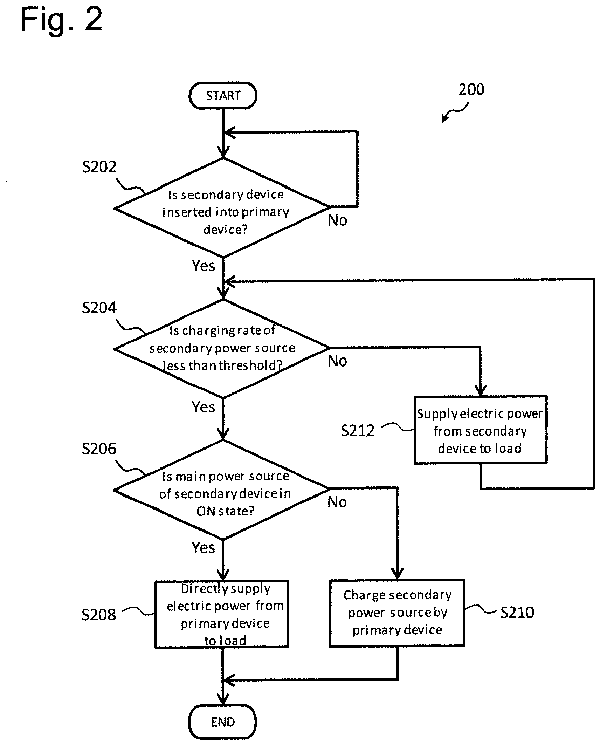

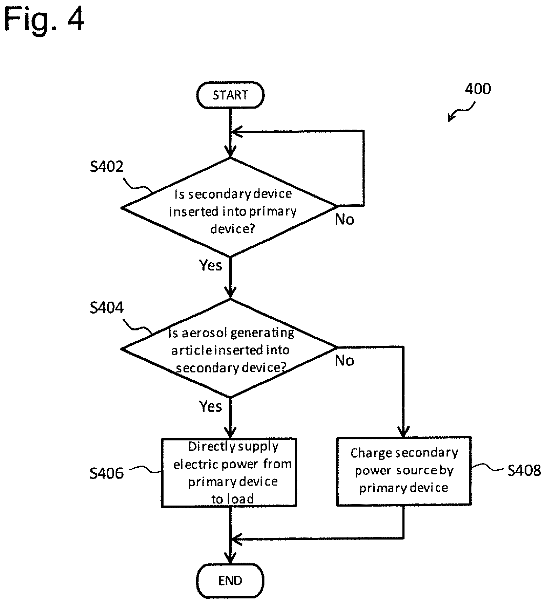

Fig. 2 is a flow chart showing an example process 200 for making the control part 134 and/or the control part 154 (hereinafter, they are or it is simply referred to as "control part" without adding any reference number, in explanations relating to the subject flow chart and the flow charts in Figs. 3 and 4, unless otherwise stated) to perform control according to the above-explained first condition. The process 200 starts when the form is the second use form wherein the secondary device 140 operates independently.

Right after the process 200 is started, the control part judges whether the secondary device 140 has been inserted into the connection port 122 in the primary device 120, in step S202. For example, the control part can judge whether the secondary device 140 is inserted into the connection port 122, by detecting electric contact between the connection terminal 146-1 of the secondary device 140 and the connection terminal 124-2 of the primary device 120. If it is judged that the secondary device 140 has been inserted into the connection port 122, the process 200 proceeds to step S204, and, if not, repeats step S202.

After the secondary device 140 is inserted into the connection port 122, the control part judges whether a charging rate of the secondary power source 148 in the secondary device 140 is less than a predetermined threshold value, in step S204. The charging rate of the secondary power source 148 is defined to be a ratio of a present charged capacity of the secondary power source 148 to a charged capacity of the secondary power source 148 when it is fully charged, and can be calculated based on a remaining charged capacity of the secondary power source 148, voltage values, or history of charging/discharging operation, for example. The predetermined threshold value is set to a charged rate at the time that a charged capacity, that is equal to a quantity of electric power consumed during a single smoking action (that is, a new aerosol generating article 160 prepared for a single smoking action is totally consumed), remains in the secondary power source 148. That is, the example threshold value implies that at least one more smoking action can be performed if the charged rate of the secondary power source 148 is equal to or more than the threshold value, and a single smoking action cannot be completed (the charged capacity of the secondary power source 148 will be exhausted before totally consuming an aerosol generating article 160 prepared for a single smoking action) if the charged rate of the secondary power source 148 is less than the threshold value. The process 200 proceeds to step S206 if the charged rate of the secondary power source 148 is less than the predetermined threshold value, and proceeds to step S212 if the charged rate is equal to or more than the threshold value.

If it is judged that the charged rate of the secondary power source 148 is less than the predetermined threshold value, the control part judges whether the main power source button (the user manipulation part 152 which functions as a power-supplying instruction part) of the secondary device 140 has been turned on, in step S206. The process 200 proceeds to step S208 if the main power source button of the secondary device 140 has been turned on, and to step S210 if it has been turned off.

Step S208 is that corresponding to the case that a user inserts the secondary device 140 into the connection port 122 in the primary device 120 while the secondary device 140 is being turned on. Thus, it is assumed in the above case that the user still wishes to continue smoking action. In step S208, the control part makes the driving circuit 146 in the secondary device 140 to operate in such a manner that electric power is directly supplied from the primary power source 126 in the primary device 120 to the load 144 in the secondary device 140. For example, the control part makes electric power to be directly supplied from the primary power source 126 to the load 144 in the secondary device 140, before inhaling action for smoking by a user is performed (without waiting for issuance of an instruction from an inhaling sensor included in the secondary device 140). By adopting the above construction, the length of time that the user has to wait can be reduced, and continuous smoking action by a user can be quickly resumed, since the aerosol generating article 160 has already been heated, at least, to a certain extent when inhaling action by the user is started.

It should be reminded that the aerosol base-material may be constructed by using any of articles including flavor components (flavor sources), such as tobacco leaves, and fibrous or porous materials as explained above; however, if the heat capacity of the aerosol base-material is large, time required to raise the temperature of the aerosol generating article 160 to temperature that makes possible to release aerosol or vapor, from a point in time that heating of the aerosol generating article 160 is started, is not short. Still, i.e., even in the case that an aerosol base-material such as that having a large heat capacity is used, it becomes possible to allow immediate starting of smoking action right after detection of inhaling action performed by a user, by preheating the aerosol generating article 160 before inhaling action for smoking is performed by the user. Especially, in the case that the aerosol base-material is constructed by use of material such as tobacco leaves or the like which include flavor components (flavor sources), there is a tendency that the heat capacity thereof is large, compared with an aerosol base-material which comprises a construction that a liquid aerosol source including a flavor component (a flavor source) is held by material such as glass fibers or the like; thus, effect, that can be obtained by performing a preheating process before inhaling action is performed by a user, is high. Further, in addition to the above case relating to a heat capacity of aerosol base-material, in the case that a load 144 having a large heat capacity and/or an aerosol source having a large heat capacity or a high boiling point are/is used, effect similar to the above can be obtained by preheating the aerosol generating article 160 before inhaling action for smoking is performed by a user.

Step S210 is that corresponding to the case that a user turns off the power of the secondary device 140, and, thereafter, inserts the secondary device 140 into the connection port 122 in the primary device 120. Thus, in this case, it is assumed that the user wishes to terminate smoking action. In step S210, the control part makes the driving circuit 146 in the secondary device 140 to operate in such a manner that the secondary power source 148 in the secondary device 140 is charged by the primary power source 126 in the primary device 120.

On the other hand, Step S212 is that corresponding to the case that the secondary device 140 is connected to the primary device 120, and a sufficient charged capacity remains in the secondary power source 148 in the secondary device 140. In step S212, the control part makes the driving circuit 146 to operate in such a manner that electric power is supplied to the load 144 by use of the internal secondary power source 148 in the secondary device 140, in a manner similar to that in the case that the secondary device 140 operates independently in the second use form. Thereafter, the process 200 returns to step S204 for judging the charging rate of the secondary power source 148; and, when the charging rate of the secondary power source 148 becomes that less than the threshold value, due to supply of electric power from the secondary power source 148 to the load 144, the judgment process in step S206 is performed as explained above.

It should be reminded that, although judgment based on the charging rate of the secondary power source 148 is made in step S204 before judgment regarding whether direct-supplying of electric power from the primary power source 126 to the load 144 is to be performed or charging of the secondary power source 148 by the primary power source 126 is to be performed is made in step S206 in the present embodiment, step S204 may be omitted. In other words, without depending on the charging rate of the secondary power source 148, and based only on step S206, it may be possible to make a judgment regarding whether direct-supplying of electric power from the primary power source 126 to the load 144 is to be performed or charging of the secondary power source 148 by the primary power source 126 is to be performed.

Also, in the present embodiment, direct supply of electric power from the primary power source 126 to the load 144 is performed in step S208, when affirmative results are obtained in all of steps S202, S204, and S206. Regarding control based on the first condition, it may be possible to perform, as an option, additional judgment before step S208, for improving accuracy of judgment regarding whether the use state is a state that allows continuation of smoking action. For example, it may be possible to perform, between step S206 and step S208, a step for judging whether the lid 120B is being open, and, only when a result of the judgment is affirmative, perform direct supplying of electric power from the primary power source 126 to the load 144 in step S208. As explained above, the state that the lid 120B is being opened is a state that a user can continue smoking action. By the additional judgment, the state of the lid 120B is taken into consideration in the control based on the first condition; thus, accuracy of judgment regarding whether the use state is a state that allows continuation of smoking action can be improved.

Fig. 3 is a flow chart showing an example process 300 for making the control part 134 and/or the control part 154 (the "control part") to perform control according to the above-explained second condition. The process 300 starts in the second use form wherein the secondary device 140 operates independently.

Right after the process 300 is started, the control part judges whether the secondary device 140 has been inserted into the connection port 122 in the primary device 120, in step S302. If it is judged that the secondary device 140 has been inserted into the connection port 122, the process 300 proceeds to step S304, and, if not, repeats step S302.

After the secondary device 140 is inserted into the connection port 122, the control part judges whether the main power source button (the user manipulation part 132 which functions as a power-supplying instruction part which allows supply of electric power to the secondary device 140) of the primary device 120 has been turned on, in step S304. The process 300 proceeds to step S306 if the main power source button of the primary device 120 has been turned on, and to step S310 if it has been turned off.

In the case that the main power source button of the primary device 120 has been turned on, the control part judges, in step S306, whether the holding part 120B in the primary device 120 is in a holding state or a non-holding state. The holding state of the holding part 120B is a state wherein the holding part 120B holds the secondary device 140 in such a manner that electrical connection between the primary device 120 and the secondary device 140 inserted into the connection port 122 is maintained. On the other hand, the non-holding state of the holding part 120B is a state wherein the holding part 120B does not hold the secondary device 140 inserted into the connection port 122, thus, electrical connection between the primary device 120 and the secondary device 140 can be released. For example, in the construction that the holding part 120B is a lid, a state that the lid is being closed is the holding state, and a state that the lid is being opened is the non-holding state. For example, the control part can judge whether the holding part 120B is in the holding state or the non-holding state, based on a signal from a mechanical switch which is operated in relation to movement of the holding part 120B. Alternatively, the primary device 120 may be constructed in such a manner that the lid 120B automatically opens when a main power source button is manipulated to turn on, and the lid 120B automatically closes when the main power source button is manipulated to turn off. The process 300 proceeds to step S308 if the holding part 120B is in the non-holding state, and proceeds to step S310 if the holding part 120B is in the holding state.

It should be reminded that the order to perform the above judgment in step S304 and the above judgment in step S306 may be switched between them.

Step S308 is that corresponding, for example, to the case that a user keeps the lid 120B of the primary device 120 open, even after the secondary device 140 is inserted into the primary device 120. Thus, in this case, it is assumed that the user still wishes to continue smoking action. In step S308, the control part makes the driving circuit 146 in the secondary device 140 to operate in such a manner that electric power is directly supplied from the primary power source 126 in the primary device 120 to the load 144 in the secondary device 140. For example, the control part may make electric power to be directly supplied from the primary power source 126 to the load 144, before inhaling action for smoking by a user is performed (without waiting for issuance of an instruction from an inhaling sensor included in the secondary device 140). By adopting the above construction, the length of time that the user has to wait can be reduced, and continuous smoking action by a user can be quickly resumed, since the aerosol generating article 160 has already been heated, at least, to a certain extent when inhaling action by the user is started.

Step S310 is that corresponding, for example, to the case that a user inserts the secondary device 140 into the connection port 122 in the primary device 120, and, thereafter, closes the lid 120B of the primary device 120 or does not turn on power to the primary device 120. Thus, in this case, it is assumed that the user wishes to terminate smoking action. In step S310, the control part makes the driving circuit 146 in the secondary device 140 to operate in such a manner that the secondary power source 148 in the secondary device 140 is charged by the primary power source 126 in the primary device 120.

Similar to the case in steps S204 and S212 of the process 200 shown in Fig. 2, the process 300 may include a step for supplying electric power to the load 144 by use of the secondary power source 148 in the secondary device 140 when the remaining charged capacity of the secondary power source 148 is sufficiently large.

Fig. 4 is a flow chart showing an example process 400 for making the control part 134 and/or the control part 154 (the "control part") to perform control according to the above-explained third condition. The process 400 starts in the second use form wherein the secondary device 140 operates independently.

Right after the process 400 is started, the control part judges whether the secondary device 140 has been inserted into the connection port 122 in the primary device 120, in step S402. If it is judged that the secondary device 140 has been inserted into the connection port 122, the process 400 proceeds to step S404, and, if not, repeats step S402.

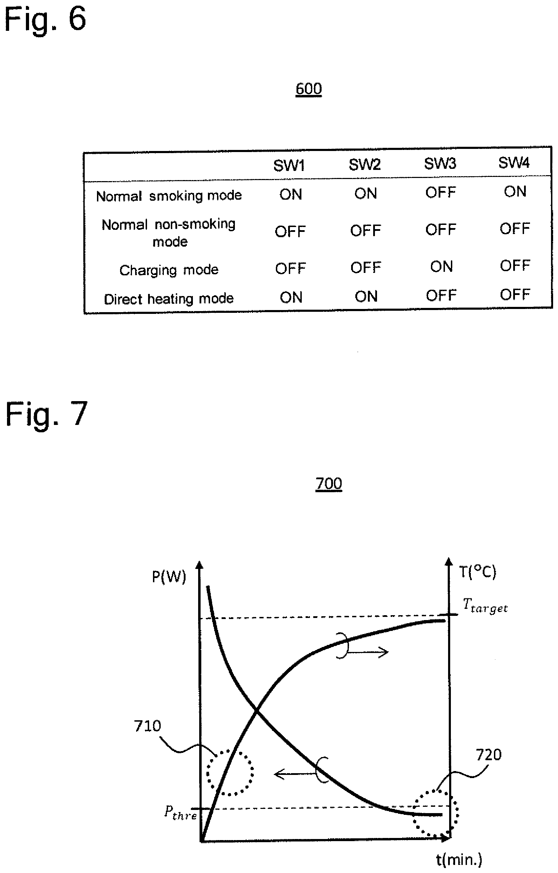

After the secondary device 140 is inserted into the connection port 122, the control part judges, in step S404, whether the aerosol generating article 160 is being inserted into the aerosol generating article holding part 142 in the secondary device 140. For example, the secondary device 140 comprises a mechanical switch which is pushed by the aerosol generating article 160 when the aerosol generating article 160 is inserted into the aerosol generating article holding part 142. The mechanical switch supplies, to the control part, an electric signal that represents a state that it is being pushed by the aerosol generating article 160. Based on the signal, the control part can judge whether the aerosol generating article 160 is being inserted into the aerosol generating article holding part 142. The process 400 proceeds to step S406 if the aerosol generating article 160 is being inserted into the aerosol generating article holding part 142, and proceeds to step S408 if the aerosol generating article 160 is not inserted. It should be reminded that the method for judging whether the aerosol generating article 160 is being inserted into the aerosol generating article holding part 142 in the secondary device 140 is not limited to a method using a mechanical switch such as that explained above, so that the judgment can be made by use of any of other various methods. For example, a temperature rising rate of the load 144, that is shown in Fig. 7 and will be explained later, in the case that the aerosol generating article 160 has been inserted into the aerosol generating article holding part 142 and that in the case that the aerosol generating article 160 is not inserted into the aerosol generating article holding part 142 are different, due to difference between the heat capacity in the former case and that in the latter case; and the quantity of electric power required for maintaining the temperature of the load 144 constant in the former case is also different from that in the latter case. Based on a value such as the value of the temperature rising rate of the load 144 or the value of the quantity of electric power supplied to the load 144, the control part can judge whether the aerosol generating article 160 has been inserted into the aerosol generating article holding part 142 in the secondary device 140. In the other example, the secondary device 140 may comprise an optical sensor, wherein the output value of the optical sensor changes according to whether or not the aerosol generating article 160 is inserted into the aerosol generating article holding part 142; and the control part may judge, based on the output value of the optical sensor, whether the aerosol generating article 160 is being inserted into the aerosol generating article holding part 142 in the secondary device 140. Further, in another example, an identifier, which is formed, for example, by use of a conductive ink or the like, may be added to a surface of the aerosol generating article 160, and the secondary device 140 may comprise a reading means for reading the identifier; and, based on whether the identifier has been read by the reading means, the control part may perform judgment similar to that explained above.

Step S406 is that corresponding to the case that the aerosol generating article 160, which can be used for smoking, is being attached to the secondary device 140 connected to the primary device 120; thus, it is assumed that a user still wishes to continue smoking action. In step S406, the control part makes the driving circuit 146 in the secondary device 140 to operate in such a manner that electric power is directly supplied from the primary power source 126 in the primary device 120 to the load 144 in the secondary device 140. For example, the control part may make electric power to be directly supplied from the primary power source 126 to the load 144, before inhaling action for smoking by a user is performed (without waiting for issuance of an instruction from an inhaling sensor included in the secondary device 140). By adopting the above construction, the length of time that the user has to wait can be reduced, and continuous smoking action by a user can be quickly resumed, since the aerosol generating article 160 has already been heated, at least, to a certain extent when inhaling action by the user is started.

Step S408 is that corresponding the case that the aerosol generating article 160 has been removed from the secondary device 140 connected to the primary device 120; thus, it is assumed that the user wishes to terminate smoking action. In step S408, the control part makes the driving circuit 146 in the secondary device 140 to operate in such a manner that the secondary power source 148 in the secondary device 140 is charged by the primary power source 126 in the primary device 120.

Similar to the case in steps S204 and S212 of the process 200 shown in Fig. 2, the process 400 may also include a step for supplying electric power to the load 144 by use of the secondary power source 148 in the secondary device 140 when the remaining charged capacity of the secondary power source 148 is sufficiently large.

In the above description, three tangible examples relating to the case that the smoking system 100, which form has been changed from the second use form to the first use form, is in a use state that smoking action by use of the secondary device 140 can be continued, are shown. When judging whether the smoking system 100, which form has been changed from the second use form to the first use form, is in a use state that smoking action by use of the secondary device 140 can be continued, one of the three conditions may be selected, or two or more of the three conditions may be combined appropriately for improving precision of judgment. In the case that two or more of the three conditions are combined, if affirmative results are obtained with respect to all of the two or more conditions, the use state is judged to be a state that smoking action by use of the secondary device 140 can be continued. Alternatively, the use state may be judged to be a state that smoking action by use of the secondary device 140 can be continued, when an affirmative result is obtained with respect to a condition that should be preferentially judged or a condition that can be judged earlier than other conditions due to the position thereof in a sequential order of the two or more conditions; and, thereafter, the above result of judgment may be updated to represent that the use state is a state that continuation of smoking action is difficult, if a negative result is obtained with respect to one of the other remaining conditions. For example, in the case that the second condition and the third condition are combined, it is judged that the use state is a state that smoking action can be continued, if an affirmative result is obtained with respect to the second condition. Thereafter, if a negative result is obtained with respect to the third condition, the above result of judgment is updated to represent that the use state is a state that continuation of smoking action is difficult.

According to a judgment method such as that explained above, it becomes possible to improve precision of judgment regarding whether the use state is a state that smoking action can be continued, since the use state of the aerosol generating article 160 (i.e., whether the aerosol generating article 160 is being inserted into the secondary device 140), in addition to the use state of the primary device 120 and the secondary device 140, is also adopted as material used for judgment. Especially, in the case that the second condition and the third condition are combined, and, further, judgment with respect to the second condition is preferentially made, superior effect can be obtained, in view of actual usability of the smoking system. In more detail, in the case that a user wishes to continue smoking, it is assumed that the user removes an aerosol generating article 160, that has been consumed by smoking action, from the secondary device 140, and, thereafter, turns on the user manipulation part 132 in the primary device 120 before inserting a new aerosol generating article 160 into the secondary device 140. In such a way of use, if it is not possible to judge, until a new aerosol generating article 160 is inserted into the secondary device 140, that the use state is a state that smoking action can be continued, there may be a risk that supplying of electric power to the load 144 is delayed, and, accordingly, user is not allowed to quickly start continuous smoking action. Thus, for improving usability in the case that the smoking system 100 is used as explained above, it is first judged, at the stage that the user manipulation part 132 in the primary device 120 is turned on, that the use state is a state that smoking action can be continued, and supplying of electric power to the load 144 is commenced. Thereafter, if an aerosol generating article 160 is not inserted into the secondary device 140 within a predetermined period, the result of the judgment is updated to represent that the use state is a state that continuation of smoking action is difficult, and supplying of electric power to the load 144 is stopped. By adopting the above construction, a user's desire that the user can quickly start continuous smoking action can be satisfied, and, at the same time, waste of electric power stored in the primary power source 126, that would occur in the case that unnecessary supplying of electric power to the load 144 is continued although a new aerosol generating article 160 is not inserted in the secondary device 160, can be prevented.

Fig. 5 is an electric circuit diagram of the smoking system 100 according to an embodiment of the present invention. As shown in Fig. 5, an electric circuit 500 in the smoking system 100 comprises an electric power supplying circuit 124 in the primary device 120, a driving circuit 146 in the secondary device 140, and a charging circuit 522 in a charging device 520. The charging device 520 is a device used for charging the primary power source 126 in the primary device 120, and the charging circuit 522 in the charging device 520 comprises an AC power source 522-1 and an AC/DC inverter 522-2. The charging device 520 can charge the primary power source 126 in the primary device 120 by direct current outputted from the AC/DC inverter 522-2, by connecting the charging device 520 to the primary device 120 via the external connection terminal 128 of the primary device 120. The electric power supplying circuit 124 in the primary device 120 comprises a DC/DC converter 124-1 and a connection terminal 124-2. The DC/DC converter 124-1 boosts and/or steps down a voltage of the primary power source 126 in accordance with control by a control part (the control part 134 in the primary device 120 or the control part 154 in the secondary device 140) for adjusting an output voltage of the primary device 120. The driving circuit 146 in the secondary device 140 comprises a first switch SW1, a second switch SW2, a third switch SW3, a fourth switch SW4, and a connection terminal 146-1. Each of the switches SW1, SW2, SW3, and SW4 is an electric switch such as a transistor or the like, for example; and each switch is controlled individually by the control part to be switched between an ON state and an OFF state. As explained above, the secondary device 140 is electrically connected to the primary device 120, as a result that the connection terminal 146-1 at the secondary device 140 side and the connection terminal 124-2 at the primary device 120 side come in contact with each other when the secondary device 140 is inserted into the connection port 122 of the primary device 120.

Fig. 6 shows state transitions 600 in the electric circuit 500 with respect to plural operation modes of the smoking system 100 according to an embodiment of the present invention. The smoking system 100 can be operated in four modes, specifically, a normal smoking mode, a normal non-smoking mode, a charging mode, and a direct heating mode. The normal smoking mode is a mode wherein the secondary device 140 is electrically disconnected from the primary device 120 and operated independently for allowing a smoking action. The normal non-smoking mode is a mode wherein smoking is stopped while the secondary device 140 is being separated from the primary device 120. The charging mode is a mode wherein the secondary device 140 is connected to the primary device 120, and the secondary power source 148 in the secondary device 140 is charged by the primary power source 126 in the primary device 120. The direct heating mode is a mode wherein the secondary device 140 is connected to the primary device 120, and electric power is directly supplied from the primary power source 126 in the primary device 120 to the load 144 in the secondary device 140 for allowing a smoking action. The normal smoking mode and the normal non-smoking mode correspond to those in the second use form, and the charging mode and the direct heating mode correspond to those in the first use form.

As shown in Fig. 6, in the normal smoking mode, the control part sets each of the first switch SW1, the second switch SW2, and the fourth switch SW4 to an ON state, and sets the third switch SW3 to an OFF state. As a result, electric power is supplied from the secondary power source 148 in the secondary device 140 to the load 144, and the aerosol generating article 160 is heated by the load 144. Accordingly, a user can perform a smoking action in the second use form. In the normal non-smoking mode, the control part sets each of all switches SW1, SW2, SW3, and SW4 to an OFF state. As a result, supply of electric power to the load 144 is blocked, and the heating process of the aerosol generating article 160 is stopped. In the charging mode, the control part sets the third switch SW3 to an ON state, and sets each of the first switch SW1, the second switch SW2, and the fourth switch SW4 to an OFF state. As a result, electric power is supplied from the primary power source 126 in the primary device 120 to the secondary power source 148 in the secondary device 140, and the secondary power source 148 is charged thereby. On the other hand, in the direct heating mode, the control part sets each of the first switch SW1 and the second switch SW2 to an ON state, and sets each of the third switch SW3 and the fourth switch SW4 to an OFF state. As a result, electric power is directly supplied from the primary power source 126 in the primary device 120 to the load 144, and the aerosol generating article 160 is heated by the load 144. Thus, a user can perform a smoking action in the first use form also.

Fig. 7 is a schematic graph for explaining temperature control when electric power is supplied to a load 144 in a secondary device 140. In the graph 700, the horizontal axis represents time t, the right-side vertical axis represents temperature T of the load 144, and the left-side vertical axis represents electric power P supplied to the load 144. The control part performs feedback control in such a manner that the temperature T of the load 144 converges to target temperature T_{target}. For example, the control part obtains a value of present temperature T of the load 144, calculates a difference ΔT between the obtained value of the temperature T and the target temperature T_{target}, and adjusts the quantity of electric power P supplied to the load 144 according to the temperature difference ΔT. For example, the present temperature T of the load 144 can be obtained by using a temperature sensor, or by using a measured resistance value of the load 144 if the load 144 has a resistance value dependent on temperature. As shown in Fig. 7, as a result of feedback control, the temperature T of the load 144 gradually approaches the target temperature T_{target}, and, on the other hand, the electric power P supplied to the load 144 decreases as the temperature T of the load 144 approaches the target temperature T_{target}.

As represented by reference symbol 710 in Fig. 7, it is shown that the temperature rising rate of temperature T of the load 144 right after start of control is high. The temperature rising rate (the risen temperature per unit time), when electric power is supplied to the load 144 under a state that the aerosol generating article 160 does not exist within the aerosol generating article holding part 142 or a state that a sufficient quantity of aerosol sources does not exist in a position near the load 144, is much larger than that under a state that the aerosol generating article 160 is properly held in the aerosol generating article holding part 142 or a state that a sufficient quantity of aerosol sources exists in a position near the load 144. Thus, for preventing such operation of heating without an object to be heated, the control part may perform control for stopping supplying of electric power to the load 144 (for example, direct-supplying of electric power from the primary power source 126 to the load 144 in the direct heating mode) in the case that the temperature rising rate of the load 144 is larger than a predetermined threshold value, for example. However, prevention of heating without an object to be heated is not a requirement when using the smoking system 100, and operation for heating the load 144 without an object to be heated by the load 144 may be used as a means for preheating the load 144 before start of inhaling action for smoking by a user. In the case that preheating of the load 144 is to be performed, the control part performs feedback control such as that explained above for controlling electric power P supplied to the load 144. For example, the control part obtains a value of the presently supplied electric power P, judges that the load 144 is sufficiently preheated if the presently supplied electric power P becomes lower than a predetermined threshold value as represented by reference symbol 720 in Fig. 7, and stops supplying of electric power to the load 144 (for example, direct-supplying of electric power from the primary power source 126 to the load 144 in the direct heating mode). As a result, the load 144 can be preheated by using the operation for heating without an object to be heated, and overheating of the load 144 can be prevented. It should be reminded that application of the operation for preheating the load 144 is not limited to that to the state that the aerosol generating article 160 does not exist in the aerosol generating article holding part 142, and the operation for preheating can also be performed in the state that the aerosol generating article 160 exists in the aerosol generating article holding part 142.

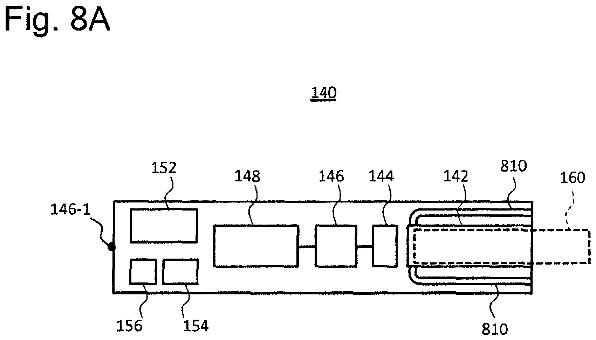

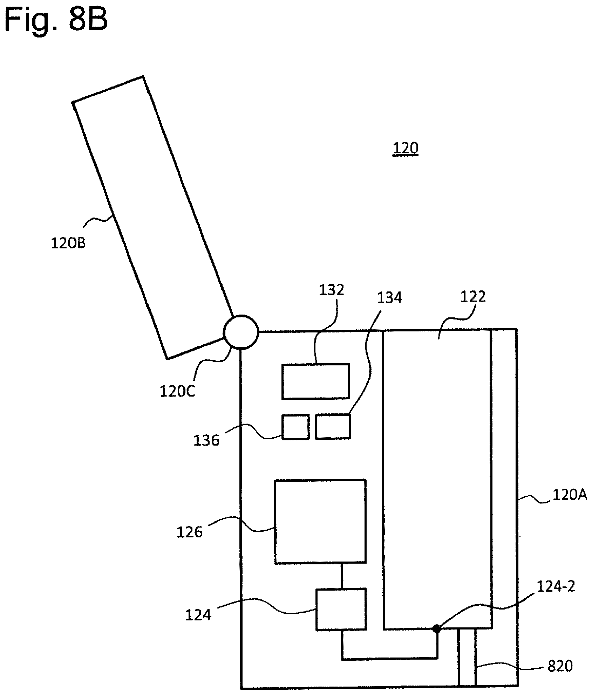

Fig. 8A shows an example of an air taking-in flow path 810 constructed in a secondary device 140. Fig. 8B shows an example of an air taking-in flow path 820 constructed in a primary device 120. The smoking system 100 is constructed in such a manner that a smoking action can be performed by inserting the secondary device 140 into the connection port 122 in the primary device 120 in the first use form (the direct heating mode); thus, it is necessary to have a construction for supplying a sufficient quantity of air to the aerosol generating article 160 even in the state that the secondary device 140 is being inserted into the connection port 122. The example air taking-in flow path 810 constructed in the secondary device 140 allows the air to be taken from the opening side of the aerosol generating article holding part 142 into the inside and flown toward the vicinity of the load 144. On the other hand, the air taking-in flow path 820 constructed in the primary device 120 is constructed to take the air form a bottom part of the main body 120A of the primary device 120 into the inside and guide the air to the deepest part in the connection port 122. The air guided into the connection port 122 via the air taking-in flow path 820 is further guided to the vicinity of the load 144 in the secondary device 140 via an air taking-in flow path, which is different from the air taking-in flow path 810 shown in Fig. 8A, in the secondary device 140, wherein the air taking-in flow path is formed to have an opening at a top part (the end part positioned opposite to the aerosol generating article holding part 142) of the secondary device 140 that is inserted in the connection port 122 (the secondary device 140 is not shown in Fig. 8B). The smoking system 100 may comprise one of the air taking-in flow path 810 and the air taking-in flow path 820, or both of them. By use of the air taking-in flow path 810 and/or the air taking-in flow path 820, a sufficient quantity of air can be supplied to the aerosol generating article 160 in the secondary device 140, even in the case that a smoking action is performed by inserting the secondary device 140 into the connection port 122 in the primary device 120 in the direct heating mode.

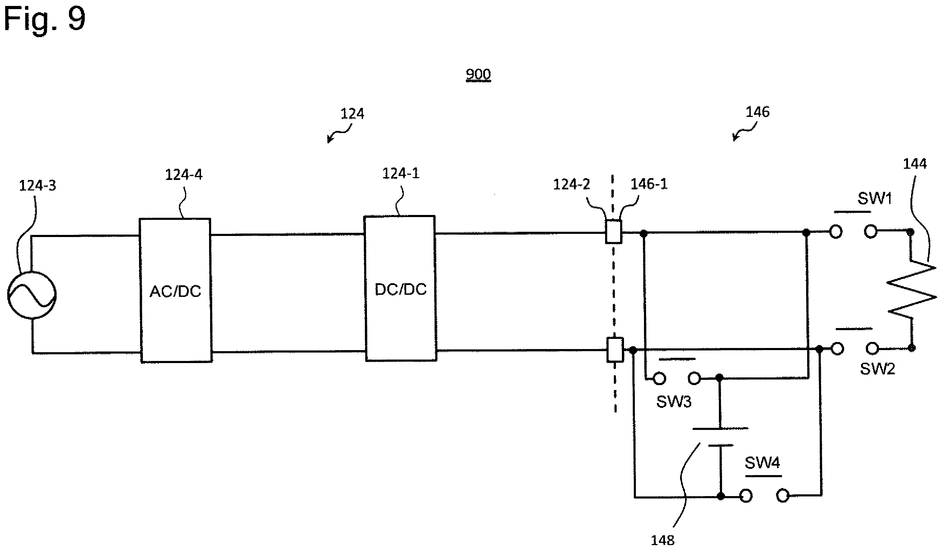

Fig. 9 is an electric circuit diagram of another example electric circuit 900 of the smoking system 100 according to an embodiment of the present invention. As shown in Fig. 9, the electric circuit 900 comprises an electric power supplying circuit 124 in the primary device 120 and a driving circuit 146 in the secondary device 140. In addition to a DC/DC converter 124-1, the electric power supplying circuit 124 in the primary device 120 comprises an AC/DC inverter 124-4. When compared with the electric circuit 500 in Fig. 5, it can be seen that the primary device 120 in Fig. 9 is constructed to have both the function of the primary device and that of the charger in Fig. 5. In the primary device 120 in Fig. 9, an output voltage of the AC/DC converter 124-4 is converted by the DC/DC converter 124-1, and thereafter supplied to the secondary device 140. It should be reminded that, in the smoking system 100 in Fig. 1, a judgment regarding whether the primary device 120 and the secondary device 140 are electrically connected to each other is made based on a state of insertion of the secondary device 140 into the connection port 122 in the primary device 120. Instead thereof, in the embodiment according to the electric circuit 900 in Fig. 9, a judgment regarding whether the primary device 120 and the secondary device 140 are electrically connected to each other may be made based on detection of engagement between a connection terminal 124-2 at the primary device 120 side and a connection terminal 146-1 at the secondary device 140 side. For example, in the case of a construction that the primary device 120 comprises a charging cable, the connection terminal 124-2 at the primary device 120 side comprises a plug (a male side) for an insertion-type receptacle, and the connection terminal 146-1 at the secondary device 140 side comprises a socket (a female side) of the insertion-type receptacle, a judgment regarding whether the primary device 120 and the secondary device 140 are electrically connected to each other may be made based on a state regarding whether the connection terminal 124-2 at the primary device 120 side is inserted into the connection terminal 146-1 at the secondary device 140 side.

Although the embodiments of the present invention have been explained in the above description, the present invention is not limited to the embodiments, and the embodiments can be modified in various ways without departing from the scope of the gist of the present invention.

For example, although an example wherein the primary device 120 in the direct heating mode supplies electric power to the load 144 in the secondary device 140 only, and the primary device 120 in the charging mode supplies electric power to the secondary power source 148 in the secondary device 140 only is explained in the above description relating to the embodiments, the embodiments are not limited by the above example, and it may be possible to supply part of electric power to the load 144 and part of the electric power to the secondary power source 148 in the secondary device 140 at the same time.

### REFERENCE SIGNS LIST

- 100: Smoking system
- 120: Primary device
- 120A: Main body part
- 120B: Holding part (lid)
- 120C: Hinge
- 122: Connection port
- 124: Electric power supplying circuit
- 124-1: DC/DC converter
- 124-2: Connection terminal
- 124-3: AC power source
- 124-4: AC/DC inverter
- 126: Primary power source
- 128: External connection terminal
- 132: User manipulation part
- 134: Control part
- 136: Memory
- 140: Secondary device
- 142: Aerosol generating article holding part
- 144: Load
- 146: Driving circuit
- 146-1: Connection terminal
- 148: Secondary power source
- 152: User manipulation part
- 154: Control part
- 156: Memory
- 160: Aerosol generating article
- 500: Electric circuit
- 522: Charging circuit
- 522-1: AC power source
- 522-2: AC/DC inverter
- 810: Air taking-in flow path
- 820: Air taking-in flow path
- 900: Electric circuit

## Claims

1. A smoking system comprising:
a secondary device which comprises a load for atomizing an aerosol source or heating a flavor source, and a power source which can supply electric power to the load;
a primary device which can supply, when it is connected to the secondary device, electric power to the load and the power source; and
a control part which operates to supply electric power from the primary device to the load, under a condition that the primary device and the secondary device are connected to each other in a use state that allows smoking action using the secondary device to be continued.

2. The smoking system according to Claim 1, wherein, when the primary device and the secondary device are connected to each other after operation for supplying electric power from the power source to the load is performed, the control part judges, based on a use state of at least one of the primary device and the secondary device, whether the condition is satisfied; and if it is judged that the condition has been satisfied, operates to supply electric power from the primary device to the load.

3. The smoking system according to Claim 1 or 2, wherein the control part operates to supply electric power from the primary device to the load, prior to starting of an inhaling action for smoking performed by using the secondary device.

4. The smoking system according to Claim 1 or 2, wherein the condition is set in such a manner that the condition is satisfied prior to starting of an inhaling action for smoking performed by using the secondary device.

5. The smoking system according to Claim 3 or 4, wherein
the secondary device comprises a power-supplying instruction part which instructs supply of electric power to the load; and,
if the secondary device is in a use state wherein it has been instructed, by the power-supplying instruction part, to supply electric power to the load, the control part judges that the condition has been satisfied, and operates to supply electric power from the primary device to the load.

6. The smoking system according to Claim 3 or 4, wherein
the primary device comprises an operation instruction part for instructing operation of the primary device, and a holding part which can keep connection between the secondary device and the primary device in a holding state and can release the connection in a non-holding state; and,
if the holding part in the primary device is in the non-holding state, and, at the same time, if a use state is that wherein the operation instruction part has been manipulated, the control part judges that the condition has been satisfied, and operates to supply electric power from the primary device to the load.

7. The smoking system according to Claim 6, wherein the operation instruction part is an instruction part for instructing supplying of electric power from the primary device to the load in the non-holding state, and instructing supplying of electric power from the primary device to the power source in the holding state.

8. The smoking system according to Claim 6, wherein the operation instruction part is an instruction part used for changing the state of the holding part from the holding state to the non-holding state.

9. The smoking system according to Claim 3 or 4, wherein, if the secondary device is in a use state wherein the load can atomize the aerosol source or heat the flavor source, the control part judges that the condition has been satisfied, and operates to supply electric power from the primary device to the load.

10. The smoking system according to any one of Claims 1-9, wherein at least one of the primary device and the secondary device comprises a flow path for supplying air to the aerosol source or the flavor source, in a state that the secondary device is being connected to the primary device.

11. The smoking system according to any one of Claims 1-10, wherein the control part can obtain a value representing a remaining charged capacity or a voltage of the power source, and, only when the value is less than a threshold value, operates to supply electric power from the primary device to the load.

12. The smoking system according to any one of Claims 1-11, wherein the control part can obtain a value representing temperature of the load, and, if a temperature rising rate of the load is larger than a threshold value, operates to stop supplying of electric power from the primary device to the load.

13. The smoking system according to any one of Claims 1-12, wherein the control part can obtain a value representing electric power supplied to the load, and, if the value representing electric power becomes a value less than a threshold value during a control process for converging temperature of the load to target temperature, operates to stop supplying of electric power from the primary device to the load.

14. A method for controlling supply of electric power in a smoking system, wherein the method comprises steps for:
obtaining a state of connection between a secondary device, which comprises a load for atomizing an aerosol source or heating a flavor source and a power source which can supply electric power to the load, and a primary device, which can supply electric power to the load and the power source when the primary device is connected to the secondary device; and
supplying electric power from the primary device to the load, under a condition that the primary device and the secondary device are connected to each other in a use state that allows smoking action using the secondary device to be continued.

15. A program which makes a smoking system to perform the method according to Claim 14.

16. A primary device which can supply, when the primary device is connected to a secondary device comprising a load for atomizing an aerosol source or heating a flavor source and a power source which can supply electric power to the load, electric power to the load and the power source; wherein
the primary device comprises a control part which operates to supply electric power from the primary device to the load, under a condition that the primary device and the secondary device are connected to each other in a use state that allows smoking action using the secondary device to be continued.

17. A secondary device which comprises a load for atomizing an aerosol source or heating a flavor source and a power source which can supply electric power to the load, and is connectable to a primary device which can supply electric power to the load and the power source; wherein
the secondary device comprises a control part which operates to supply electric power from the primary device to the load, under a condition that the primary device and the secondary device are connected to each other in a use state that allows smoking action using the secondary device to be continued.
